**Europäisches Patentamt**

**European Patent Office**

**Office européen des brevets**

(11) Publication number : **0 495 581 A2**

# (12) EUROPEAN PATENT APPLICATION

(21) Application number : **92300176.2**

(22) Date of filing : **09.01.92**

(51) Int. Cl.⁵ : **C22B 9/05,** C21C 7/00, F27D 3/10

(30) Priority : **16.01.91 GB 9100906**

(43) Date of publication of application :
**22.07.92 Bulletin 92/30**

(84) Designated Contracting States :
**AT DE ES FR GB IT**

(71) Applicant : **FOSECO INTERNATIONAL LIMITED**
**285 Long Acre**
**Nechells Birmingham B7 5JR (GB)**

(72) Inventor : **Stride, Steven**
**69 Ludlow Road**
**The Poplars, Kidderminster, DY10 1NW (GB)**

(74) Representative : **Moore, John Hamilton**
**Foseco Holding International Limited Group**
**Patents Department 285 Long Acre Nechells**
**Birmingham B7 5JR (GB)**

(54) **Rotary pipe conveyor apparatus for granular materials.**

(57)   A rotary pipe conveyor apparatus for conveying granular materials comprises a hopper (1) and an inclined rotary delivery tube (2) rotatable about its longitudinal axis and the hopper (1) is connected to the delivery tube (2) by means of a rigid connector (3) having a bore (4) of elliptical cross-section and an annular groove (5) around the bore at its lower end (6) in which the upper end (7) of the delivery tube (2) is located. The apparatus is of particular use for making controlled additions of granular materials to molten metal.

FIG. 1

EP 0 495 581 A2

This invention relates to a rotary pipe conveyor apparatus for granular materials.

Rotary pipe conveyors are used in foundries for such applications as conveying dry sand to sand mills and adding measured additions of materials to molten metal.

These conveyors consist of a hopper, a rotating cup beneath the hopper and an inclined rotating delivery tube connected to the rotating cup by a flexible pipe.

The known rotary pipe conveyors suffer from the following disadvantages:-

1. The flexible pipe has a low life expectancy.

2. The flexible pipe absorbs a significant proportion of the drive power.

3. The conveyor requires space to accommodate an acceptable bend radius of the flexible pipe.

It has now been found that these disadvantages can be overcome if the flexible tube is replaced by a rigid connector of a particular shape and configuration.

According to the invention there is provided a rotary pipe conveyor apparatus comprising a hopper and an inclined rotary delivery tube rotatable about its longitudinal axis and having an upper end and a lower end, wherein the hopper is connected to the delivery tube by means of a rigid connector having a bore of elliptical cross-section and an annular groove around the bore at its lower end in which the upper end of the delivery tube is located.

At least a portion of the hopper is preferably in the shape of an inverted cone in order to achieve optimum flow of granular material from the hopper into the connector, and the aperture at the base of the hopper should have a cross-sectional area such that bridging of the granular material in the hopper will not occur. Usually the aperture will have a diameter of no less than 4 cm.

The delivery tube is inclined at a relatively shallow angle to the horizontal so that the delivery tube slopes downwardly from the inlet end to the outlet end. The angle of inclination should be such that granular material contained in the delivery tube will not flow out of the tube when the delivery tube is stationary and will usually be of the order of 5° to 10°.

The connector must have an elliptical cross-section bore in order to maintain the maximum possible cross-sectional area between the aperture at the base of the hopper and the delivery tube. The connector is inclined much more steeply to the horizontal than the delivery tube, usually at an angle of no less than 45°. Location of the upper end of the delivery tube in an annular groove around the bore at the lower end of the connector ensures unrestricted flow of granular material from the connector to the delivery tube.

Some granular materials are more difficult to feed satisfactorily than others. When the apparatus is used to feed such materials the bore of the rigid connector preferably has a bend in side elevation as this construction gives a smoother, tangential connection with the hopper.

When the apparatus is used granular material is placed in the hopper, and some of the material falls through the hopper and the connector into the delivery tube. The delivery tube is then rotated using a drive means such as an electric motor and granular material flows through the delivery tube. Starting and stopping of the rotation of the delivery tube enables precise starting and stopping of material flow to be achieved, and variation in the rotational speed of the delivery tube will give a proportional variation of the material flow.

The rotary pipe conveyor apparatus of the invention may be used for conveying granular materials for a variety of applications but it is of particular use for making controlled additions of granular materials to molten metals. For example the apparatus may be used to provide the means for supplying a granular treatment agent for molten metal in the apparatus described in European Patent Application Publication No. 0396267A. That apparatus comprises a rotary device consisting of a hollow shaft and a hollow rotor for dispersing particulate treatment agent and gas in molten metal contained in the vessel and means for supplying particulate treatment agent and gas to the rotary device.

When the rotary pipe conveyor forms part of apparatus for treating molten metal with a granular treatment agent the rotary pipe conveyor is preferably operated under positive pressure. This can be achieved for example by producing the hopper with an aperture in its side wall for admitting gas and means such as a lid which is spring mounted on a platform inside the hopper for closing the mouth of the hopper. When the apparatus is in operation the spring is fully extended and the lid, in combination with the gas pressure in the hopper, seals the mouth of the hopper. When the apparatus is not in operation and it is desired to fill the hopper with more granular material, a second hopper containing the material, and can be located above the hopper of the rotary pipe conveyor which can be raised so that the spring is compressed, the lid is depressed and the granular material can enter the hopper.

In order that the rotary pipe conveyor may operate under pressure the delivery tube may be fully enclosed and fitted with rotary seals, and in use granular material emerges from the end of the delivery tube and falls under gravity out of the housing into the top end of a static feed pipe located inside a rotary device for injecting the granular material into molten metal.

The invention is illustrated by way of example with reference to the accompanying drawings in which

Figure 1 is a perspective view of one half of a rotary pipe conveyor apparatus according to the invention sectioned through its vertical axis

Figure 2 is a vertical section through the apparatus of Figure 1

Figure 3 is a section along the line A - A of Figure 2

Figure 4 is a vertical section through an alternative embodiment of the rotary pipe conveyor apparatus according to the invention and

Figure 5 is a diagrammatic view of apparatus for treating molten metal with gas and a granular treatment agent, and incorporating a rotary pipe conveyor apparatus of the invention.

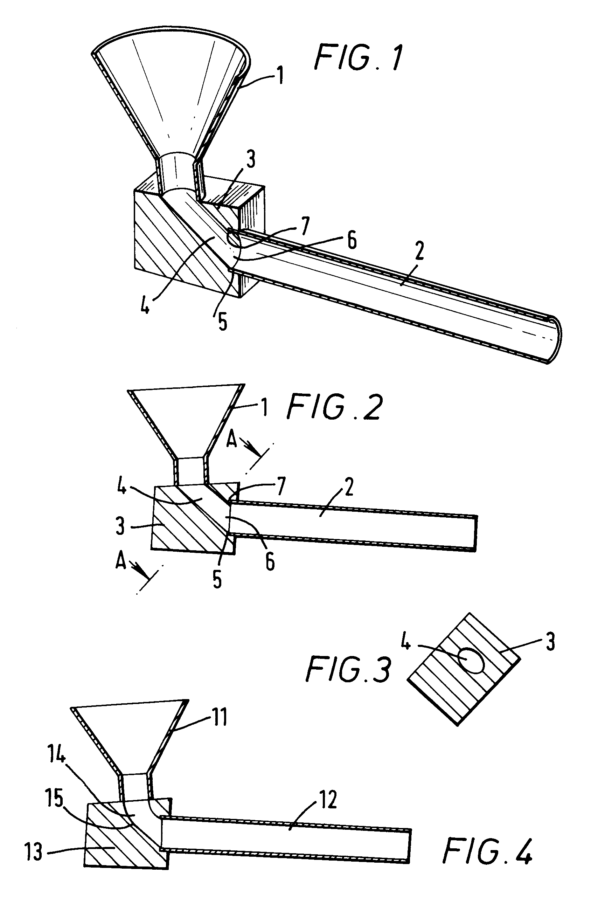

Referring to Figures 1 to 3 of the drawings a rotary pipe conveyor apparatus consists of a hopper 1 and an inclined rotary delivery tube 2 having a drive means (not shown) for rotating the delivery tube 2 about its longitudinal axis. The delivery tube 2 is inclined at an angle of 6.5° to the horizontal. The hopper 1 is connected to the delivery tube 2 by means of a rigid connector 3 having a bore 4 of elliptical cross-section and an annular groove 5 around the bore 4 at its lower end 6 in which the upper end 7 of the delivery tube is located. The bore 4 of the connector 3 is inclined at an angle of 45° to the horizontal.

When the apparatus is used granular material is placed in the hopper 1 and some of the material falls through the hopper 1 and the connector 3 into the delivery tube 2. The delivery tube 2 is then rotated and the granular material flows through the delivery tube in a controlled manner.

Figure 4 shows a rotary pipe conveyor apparatus similar to the apparatus of Figures 1 to 3 consisting of a hopper 11 and an inclined rotary delivery tube 12 connected to each other by a rigid connector 13. The connector 13 has an elliptical cross-section bore 14 having a bend 15 in side elevation.

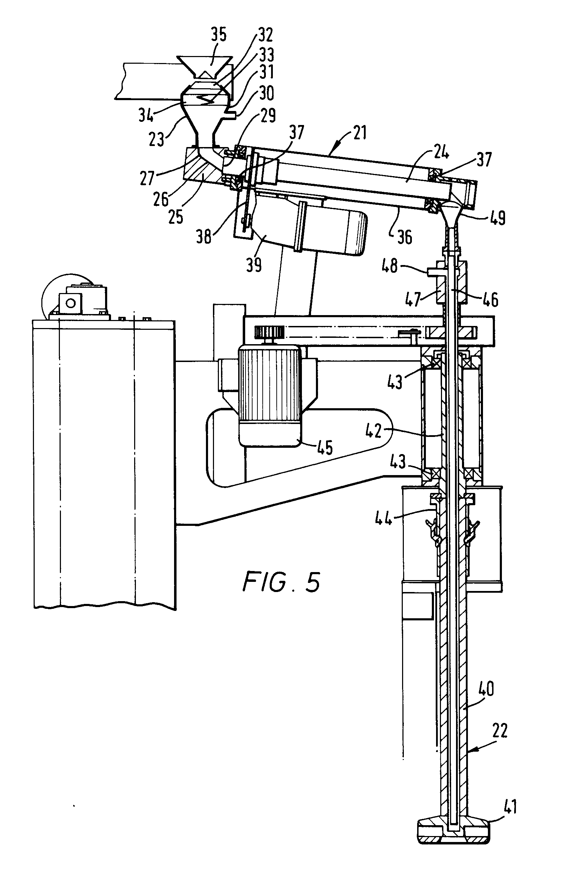

Referring to Figure 5 an apparatus for treating molten metal with a gas and a granular treatment agent consists of a rotary pipe conveyor apparatus 21 and a rotary device 22. The rotary pipe conveyor apparatus 21 consists of a hopper 23 and an inclined rotary delivery tube 24 rotatable about its longitudinal axis, the hopper 23 being connected to the delivery tube 24 by means of a rigid connector 25. The bore 26 of the connector has an elliptical cross-section and a bend 27 in side elevation. The connector 25 has an annular groove around the bore 26 at its lower end 28 in which the upper end 29 of the delivery tube 24 is located.

The hopper 23 has an inlet 30 in its side wall 31 connected to a source of gas (not shown) and a lid 32 mounted by means of a spring 33 on a platform 34 inside the hopper 23. A second hopper 35 is located above hopper 23.

The delivery tube 24 is enclosed in housing 36, has rotary seals 37 and is connected to drive means by chain drive 38 to drive means 39 consisting of a geared electric motor.

The rotary device 22 consists of a hollow shaft 40 and a rotor 41 of the type shown and described in European Patent Application Publication no. 0332292A. The top of the hollow shaft 40 is joined to the lower end of a hollow drive shaft 42 which is supported in rotary bearings 43 by means of quick release coupling 44 and shaft 40 is also connected to electric motor drive 45.

A static feed pipe 46 is located inside the drive shaft 42 and rotary device 22, and is connected to a source of gas (not shown), such as nitrogen or argon, by rotary gas joint 47.

In use the rotary pipe conveyor apparatus 21 and rotary device 22 are raised so that lid 32 is pressed against hopper 35 which is then filled with granular treatment agent. Hopper 23 is thus opened and the granular treatment agent falls into hopper 23. The rotary pipe conveyor apparatus 21 and the rotary device 22 are then lowered so that the lid 32 closes hopper 23, and before the rotary device is immersed in molten metal gas, such as argon, is introduced through inlet 10 into static feed pipe 46 via hopper 23 and rotary pipe conveyor 21 and through inlet 48 of rotary gas joint 47 into the bore of drive shaft 42.

The rotary pipe conveyor apparatus 21 and the rotary device 22 continue to lower further until the rotary device 22 is immersed in molten metal. The rotary device 22 is then caused to rotate, and after a predetermined time, usually of the order of 10 seconds, rotary delivery tube 24 is also caused to rotate. Molten metal then pumps through the rotor 41.

The granular treatment agent feeds from hopper 23 through the rotary pipe conveyor 21 into the static feed pipe 46 via connector 49 from which it emerges into the rotor 41 together with the gas which is fed through the bore of the drive shaft 42 and rotor shaft 40. The granular treatment agent and gas are thus mixed with molten metal being pumped through the rotor.

## Claims

1. A rotary pipe conveyor apparatus comprising a hopper (1, 11, 23) and an inclined rotary delivery tube (2, 12, 24) rotatable about its longitudinal axis and having an upper and a lower end characterised in that the hopper (1, 11, 23) is connected to the delivery tube (2, 12, 24) by means of a rigid connector (3, 13, 25) having a bore (4, 14, 26) of elliptical cross-section and an annular groove (5) around the bore (4, 14, 26) at its lower end (6, 28) in which the upper end (7, 29) of the delivery tube (2, 12, 24) is located.

2. A rotary pipe conveyor apparatus according to Claim 1 characterised in that at least a portion of the hopper (1, 11, 23) is in the shape of an inverted cone.

3.  A rotary pipe conveyor apparatus according to Claim 1 or Claim 2 characterised in that the hopper (1, 11, 23) has an aperture at its base of diameter not less than 4 cm.

4.  A rotary pipe conveyor apparatus according to any of Claims 1 to 3 characterised in that the delivery tube (2, 12, 24) is inclined to the horizontal at an angle of 5° to 10°.

5.  A rotary pipe conveyor apparatus according to any one of Claims 1 to 4 characterised in that the rigid connector (3, 13, 25) is inclined to the horizontal at an angle of not less than 45°.

6.  A rotary pipe conveyor apparatus according to any one of Claims 1 to 5 characterised in that the bore (14, 26) of the rigid connector (13, 25) has a bend (15, 27) in side elevation.

7.  Apparatus for the treatment of molten metal with a granular treatment agent and gas comprising a rotary device (22) consisting of a hollow shaft (40) and a hollow rotor (41) and means for supplying granular treatment agent and gas to the rotary device characterised in that the means for supplying the granular treatment agent is a rotary pipe conveyor apparatus (21) according to Claim 1.

FIG.1

FIG.2

FIG.3

FIG.4

FIG. 5